# EUROPEAN PATENT APPLICATION

(11) **EP 4 733 634 A1**
(43) Date of publication of application: **29.04.2026**
(21) Application number: 25210919.4
(22) Date of filing: 23.10.2025
(51) Int. Cl.: F16H 59/12, F16H 59/10, B60W 30/182, B60W 50/08, B60L 50/60, B60L 15/20

(54) **ELECTRIC VEHICLE AND PROGRAM**

(30) Priority: 24.10.2024 JP 2024187581
(71) Applicant: TOYOTA JIDOSHA KABUSHIKI KAISHA, Toyota-shi, Aichi-ken 471-8571 (JP)
(72) Inventor: IMAMURA, Tatsuya, TOYOTA-SHI, AICHI-KEN, 471-8571 (JP); ISAMI, Yoichiro, TOYOTA-SHI, AICHI-KEN, 471-8571 (JP); MOTEKI, Taro, TOYOTA-SHI, AICHI-KEN, 471-8571 (JP); OKAMURA, Yukari, TOYOTA-SHI, AICHI-KEN, 471-8571 (JP)
(74) Representative: Cabinet Beau de Loménie

(57) **Abstract**

The present disclosure provides an electric vehicle (100). The electric vehicle (100) has a plurality of modes that differ in output control of a motor(4F, 4R) in response to operation input by a driver. The plurality of modes include a manual operation mode configured to be a mode in which output characteristics of the motor(4F, 4R) can be switched in multiple stages by operating a shift lever (24). Mode switching from the manual operation mode to another mode, or from the another mode to the manual operation mode is achieved by operating the shift lever (24) and one or more other operation interfaces in a predetermined manner.

## Description

### BACKGROUND

### Field

The present disclosure relates to an electric vehicle having a plurality of modes which differ in output control of a motor in response to operation input by a driver. More specifically, the present disclosure relates to the electric vehicle having a manual operation mode configured to be a mode in which output characteristics of the motor can be switched in multiple stages by operating a shift lever. The present disclosure also relates to a program executable by a computer mounted on a vehicle which is suitable for use in an electric vehicle equipped with a shift lever or a computer-readable storage medium storing the program.

### Background Art

JP Patent No. 7501228 discloses a technique for simulating a virtual engine and a virtual manual transmission by adding a shift lever and a clutch pedal to a battery electric vehicle (BEV) and controlling a motor based on operation signals from these additional devices. According to the prior art, the driver can switch a mode between a mode in which output characteristics of the motor are controlled in response to the driver's operation of the shift lever and the clutch pedal and a mode in which the motor's output is controlled without requiring the driver to operate the shift lever or the clutch pedal. In the prior art, specific examples of a mode switching device operated by the driver include a switch button installed on an instrument panel inside the vehicle and a voice recognition device recognizing a voice of the driver.

### SUMMARY

The biggest concern when switching a mode is unintentional mode switching due to erroneous operation. If unintentional mode switching occurs while the vehicle is traveling, the driver may be confused or disoriented due to a sudden change in output characteristics of a motor. One way to avoid such inconvenience is to permit mode switching only when the vehicle is stopped and not permit mode switching while the vehicle is traveling. However, not being able to switch the mode while the vehicle is traveling could deprive the driver of pleasure in driving.

Therefore, what is required for the electric vehicle which has a plurality of modes that can be switched by the driver's operation like the electric vehicle in the prior art is to enable mode switching during traveling of the vehicle while taking measures to prevent erroneous operation. However, if the switching operation becomes too complicated, it may hinder the driver's concentration on driving and the driver may feel mode switching to be troublesome.

The present disclosure has been made in consideration of the above-mentioned problems. One object of the present disclosure is to enable a driver to perform switching operation smoothly while preventing erroneous operation when switching a mode in an electric vehicle having a plurality of modes which differ in motor output control in response to the driver's operation input.

The present disclosure provides an electric vehicle to achieve the above object. According to one aspect of the present disclosure, the electric vehicle has a plurality of modes that differ in output control of a motor in response to operation input by a driver. The plurality of modes include a manual operation mode configured to be a mode in which output characteristics of the motor can be switched in multiple stages by operating a shift lever. Mode switching from the manual operation mode to another mode, or from the another mode to the manual operation mode is achieved by operating the shift lever and one or more other operation interfaces in a predetermined manner.

The present disclosure also provides a program for achieving the above object. The program is executable by a computer mounted on an electric vehicle comprising a shift lever. The program may be stored in a non-transitory computer-readable storage medium. According to one embodiment of the present disclosure, the program causes the computer to enable, in the electric vehicle, selection of a plurality of modes that differ in output control of a motor in response to operation input by a driver. The plurality of modes includes a manual operation mode, in which output characteristics of the motor can be switched in multiple stages by operating a shift lever. The program also causes the computer to switch a mode from the manual operation mode to another mode, or from the another mode to the manual operation mode when the shift lever and one or more other operation interfaces are operated in a predetermined manner.

According to the present disclosure, by using the shift lever as one of the operation interfaces used for switching the mode, a movement required for operating the shift lever in the manual operation mode can be utilized for switching the mode. This allows the driver to perform switching operation with smooth movements while preventing erroneous operation when switching the mode.

### BRIEF DESCRIPTION OF THE DRAWINGS

FIG. 1 is a diagram showing a configuration of an electric vehicle according to the present disclosure.
FIG. 2 is a diagram showing a configuration of a control device related to output control of a motor.
FIG. 3 is a diagram showing a configuration of a travel range selector and how to operate it.
FIG. 4 is a diagram showing a configuration of a shift position selector and how to operate it.
FIG. 5 is a diagram showing a method of switching from operation of a travel range selector to operation of a shift position selector.
FIG. 6 is a diagram showing a first embodiment of an operation interface used to switch the shift position selector and the travel range selector, and actions for switching from the travel range selector to the shift position selector using the operation interface of the first embodiment.
FIG. 7 is a diagram showing actions for switching from the shift position selector to the travel range selector using the operation interface of the first embodiment.
FIG. 8 is a diagram showing a configuration of a control system and a flow of a switching process for realizing switching of the automatic control mode and the manual operation mode.
FIG. 9 is a diagram showing another example of the configuration of the control system and the flow of the switching process for realizing switching of the automatic control mode and the manual operation mode.
FIG. 10 is a diagram showing a second embodiment of the operation interface used to switch the shift position selector and the travel range selector and actions for switching from the travel range selector to the shift position selector using the operation interface of the second embodiment.
FIG. 11 is a diagram showing a third embodiment of the operation interface used to switch the shift position selector and the travel range selector and actions for switching from the travel range selector to the shift position selector using the operation interface of the third embodiment.
FIG. 12 is a diagram showing a fourth embodiment of the operation interface used to switch the shift position selector and the travel range selector and actions for switching from the travel range selector to the shift position selector using the operation interface of the fourth embodiment.
FIG. 13 is a diagram showing a fifth embodiment of the operation interface used to switch the shift position selector and the travel range selector and actions for switching from the travel range selector to the shift position selector using the operation interface of the fifth embodiment.
FIG. 14 is a diagram showing a sixth embodiment of the operation interface used to switch the shift position selector and the travel range selector and actions for switching from the travel range selector to the shift position selector using the operation interface of the sixth embodiment.
FIG. 15 is a diagram showing a seventh embodiment of the operation interface used to switch the shift position selector and the travel range selector and actions for switching from the travel range selector to the shift position selector using the operation interface of the seventh embodiment.
FIG. 16 is a diagram showing a configuration of a first modification of the selector.
FIG. 17 is a diagram showing a configuration of a control system and a flow of a switching process for realizing switching of the automatic control mode and the manual operation mode in a first modification.
FIG. 18 is a diagram showing a configuration of a second modification of the selector.

### DETAILED DESCRIPTION

### 1. Configuration of Power System of Electric Vehicle

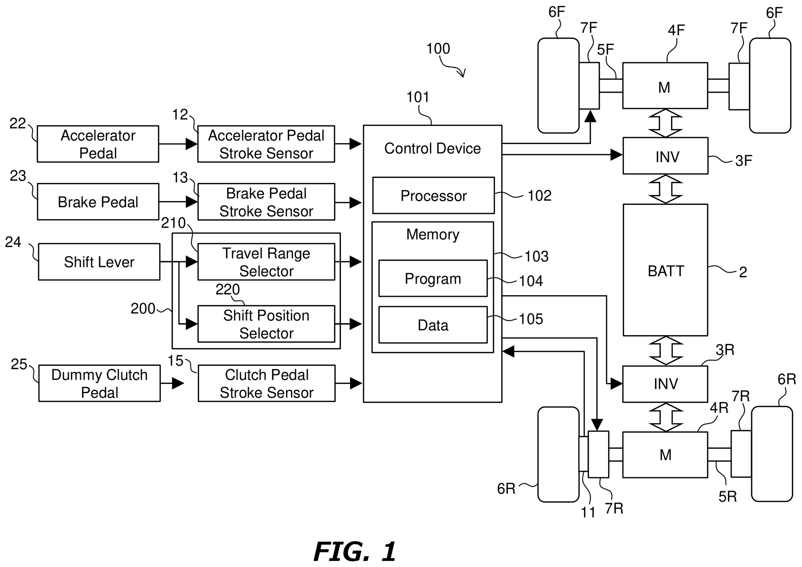

FIG. 1 is a schematic diagram showing a configuration of an electric vehicle 100 according to an embodiment of the present disclosure. A configuration of a power system of the electric vehicle 100 is described with reference to FIG. 1.

The electric vehicle 100 is equipped with two electric motors (M) 4F and 4R at the front and the rear as power sources for driving. Hereinafter, the electric motor is simply referred to as a motor. The motors 4F and 4R are, for example, three-phase AC motors. The front motor 4F is connected to a front drive shaft 5F, which drives front wheels 6F. The rear motor 4R is connected to a rear drive shaft 5R, which drives rear wheels 6R. The front wheels 6F are suspended by front suspension 7F, in which the right and the left can be controlled independently and electronically. The rear wheels 6R are suspended by rear suspension 7R, in which the right and left are controlled independently and electronically.

The front electric motor 4F and the rear electric motor 4R are equipped with a front inverter 3F and a rear inverter 3R, respectively. Each of the inverters (INV) 3F and 3R is connected to a battery (BATT) 2. The battery 2 stores electrical energy for driving the motors 4F and 4R. In other words, the electric vehicle 100 is a battery electric vehicle (BEV) which is driven by the electric energy stored in the battery 2. The inverters 3F and 3R are, for example, voltage-type inverters and control the torque of the motors 4F and 4R by PWM control.

### 2. Configuration of Control System of Electric Vehicle

A configuration of a control system of the electric vehicle 100 is described with reference to FIG. 1.

The electric vehicle 100 is equipped with a control device 101. The control device 101 is connected to sensors and devices to be controlled that are mounted on the electric vehicle 100 via an in-vehicle network. The control device 101 includes at least a processor (processing circuit) 102 and a memory 103. The memory 103 includes a RAM for temporarily storing data and a ROM for storing a program 104 that can be executed by the processor 102 and various data 105 related to the program. The program 104 is composed of a plurality of instructions. The processor 102 reads the program 104 and the data 105 from the memory 103, executes them, and generates a control signal based on signals acquired from respective sensors. The number of the processors 102 and the memories 103 included in the control device 101 may be one or more.

The control device 101 performs various kinds of control of the electric vehicle 100. One or more programs 104 are read from the memory 103 and executed by the processor 102, thereby realizing control of the electric vehicle 100 by the control device 101.

Control of the electric vehicle 100 by the control device 101 includes motor output control for controlling output of the motors 4F and 4R. In the motor output control, the control device 101 can control the motors 4F and 4R in a plurality of modes. The modes selectable by the control device 101 include an automatic control mode and a manual operation mode. The automatic control mode is a mode in which the motors 4F and 4R are controlled with normal output characteristics in response to an output request from the driver. The manual operation mode is a mode for operating the electric vehicle 100 as if it were a manual transmission vehicle (MT vehicle). In the manual operation mode, the output characteristics of the motors 4F and 4R can be switched in multiple stages by operation of a shift lever 24, which is described below.

The electric vehicle 100 is equipped with a vehicle speed sensor 11. At least one of wheel speed sensors (not shown in the figures) installed on each of the right and left front wheels 6F and the right and left rear wheels 6R is used as the vehicle speed sensor 11.

The electric vehicle 100 is equipped with an accelerator pedal stroke sensor 12. The accelerator pedal stroke sensor 12 is installed on an accelerator pedal 22 and outputs a signal indicating an amount of depression of the accelerator pedal 22 (accelerator pedal stroke), that is, an accelerator opening degree.

The electric vehicle 100 is equipped with a brake pedal stroke sensor 13. The brake pedal stroke sensor 13 is installed on the brake pedal 23 and outputs a signal indicating an amount of depression of the brake pedal 23 (brake pedal stroke), that is, a brake opening degree.

The electric vehicle 100 is equipped with a shift lever 24. The shift lever 24 is connected to a selector 200 installed on a center console. The selector 200 is composed of a travel range selector 210, which functions in the automatic control mode, and a shift position selector 220, which functions in the manual operation mode. The shift lever 24 is shared by the travel range selector 210 and the shift position selector 220.

In the travel range selector 210, the shift lever 24 is used as an operation interface for selecting a travel range. The travel range selector 210 outputs a signal indicating the travel range selected by the shift lever 24. The detailed configuration of the travel range selector 210 and the method of operation using the shift lever 24 is described below.

In the shift position selector 220, the shift lever 24 is used as an operation interface for the driver to select a shift position of a virtual manual transmission. The shift position selector 220 outputs a signal indicating the shift position selected by the shift lever 24. The detailed configuration of the shift position selector 220 and the method of operation using the shift lever 24 is described below.

Furthermore, the electric vehicle 100 is equipped with a dummy clutch pedal 25. The dummy clutch pedal 25 has a structure similar to that of a clutch pedal installed in the conventional manual transmission engine vehicle. For example, the dummy clutch pedal 25 is equipped with a reaction force mechanism that generates a reaction force against the depression by the driver. A position where no pedal force is applied is a start position of the dummy clutch pedal 25, and a position where the dummy clutch pedal 25 is fully depressed is an end position of the dummy clutch pedal 25. The driver can operate the dummy clutch pedal 25 from the start position to the end position against the reaction force by the reaction force mechanism.

The vehicle 100 is equipped with a clutch pedal stroke sensor 15. The clutch pedal stroke sensor 15 is a sensor which is installed on the dummy clutch pedal 25 and outputs a signal corresponding to an operation amount of the dummy clutch pedal 25. The operation amount of the dummy clutch pedal 25 means an amount of depression of the dummy clutch pedal 25 by the driver, that is, a clutch pedal stroke.

### 3. Motor Output Control

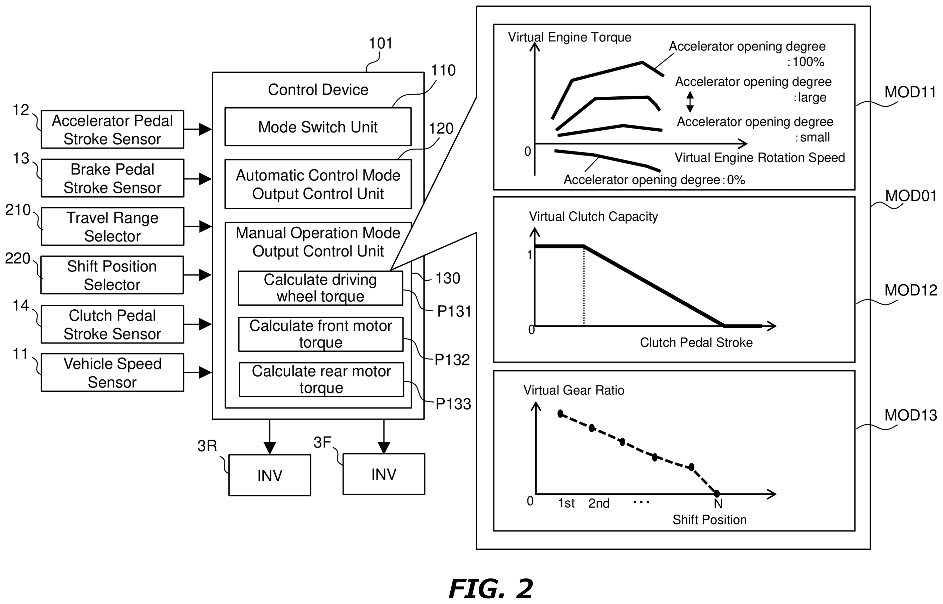

FIG. 2 is a diagram showing a configuration of the control device 101 related to the output control of the motors 4F and 4R. The control device 101 includes functions as a mode switch unit 110, an automatic control mode output control unit 120, and a manual operation mode output control unit 130. These functions are realized by the processor 102 executing one or more motor control programs 104 stored in the memory 103.

The mode switch unit 110 switches the mode which relates to the output control of the motors 4F and 4R in response to operation input by the driver. The modes which can be switched by the mode switch unit 110 include the automatic control mode and the manual operation mode described above. Switching of the mode by the mode switch unit 110 is performed in accordance with particular operation of the shift lever 24, which is described below.

When the mode is switched to the automatic control mode by the mode switch unit 110, the control device 101 functions as the automatic control mode output control unit 120. The automatic control mode output control unit 120 performs output control in accordance with the travel range selected by the travel range selector 210. For example, in a case where the selected travel range is a D range, the automatic control mode output control unit 120 acquires the vehicle speed from the signal of the vehicle speed sensor 11 and the accelerator opening degree from the signal of the accelerator pedal stroke sensor 12. The automatic control mode output control unit 120 has a motor torque map with the accelerator opening degree and the vehicle speed as parameters. The automatic control mode output control unit 120 inputs the vehicle speed and the accelerator opening degree into the motor torque map and controls the inverters 3F and 3R such that the motors 4F and 4R generate the torque obtained from the motor torque map.

When the mode is switched to the manual operation mode by the mode switch unit 110, the control device 101 functions as the manual operation mode output control unit 130. The manual operation mode output control unit 130 executes Process P131 for calculating torque to be generated at the driving wheels. In addition, the manual operation mode output control unit 130 executes Process P132 and Process P133. Process P132 is a process for calculating the torque to be generated by the front motor 4F, and Process P133 is a process for calculating the torque to be generated by the rear motor 4R. Process P132 and Process P133 are executed in accordance with the driving wheel torque calculated in Process P130 and a torque distribution between the front wheels 6F and the rear wheels 6R.

A vehicle model MOD01 is used to calculate the driving wheel torque in Process P131. The vehicle model MOD01 includes an engine model MOD11, a clutch model MOD12, and a transmission model MOD13. An engine, a clutch, and a manual transmission virtually realized by the vehicle model MOD01 are referred to as a virtual engine, a virtual clutch, and a virtual manual transmission, respectively. In the engine model MOD11, the virtual engine is modeled. In the clutch model MOD12, the virtual clutch is modeled. In the transmission model MOD13, the virtual manual transmission is modeled.

In the engine model MOD11, a relationship between a virtual engine rotation speed and virtual engine torque is defined for each accelerator opening degree. Rotation speed-torque characteristics of the engine model MOD11 can be set to characteristics assuming a gasoline engine or can be set to characteristics assuming a diesel engine. Furthermore, the characteristics can be set to characteristics assuming a natural intake engine or a turbocharged engine. The virtual engine torque calculated by the engine model MOD11 is input to the clutch model MOD12. When the virtual engine rotation speed decreases to a predetermined engine stall speed or less, the virtual engine torque is changed to zero in a very short time, and the virtual engine rotation speed is also reduced to zero.

In the clutch model MOD12, a virtual clutch capacity is given corresponding to the clutch pedal stroke. When the clutch pedal stroke is 100%, the virtual clutch capacity is zero. At this time, in the clutch model MOD12, the virtual clutch is completely released, and transmission of the virtual engine torque from the virtual engine to the virtual manual transmission is interrupted. When the clutch pedal stroke is reduced from 100%, a state of the virtual clutch changes from a released state to a half-engaged state at a clutch meet point. As a result, the virtual clutch capacity starts to increase, and accordingly, the virtual engine torque starts to be transmitted from the virtual engine to the virtual manual transmission. Then, when the virtual clutch capacity becomes equal to or larger than the virtual engine torque, the virtual clutch becomes in an engaged state, and all of the virtual engine torque output from the virtual engine is input to the virtual manual transmission.

In the transmission model MOD13, a virtual gear ratio is set for each shift position selected by the shift position selector 220. The first gear has the largest virtual gear ratio, and the virtual gear ratio decreases in the order of the second gear, the third gear, the fourth gear, the fifth gear, and the sixth gear. Virtual transmission torque is calculated using the virtual gear ratio calculated by the transmission model MOD13 and virtual clutch torque input from the clutch model MOD12. The virtual clutch torque is zero when the clutch pedal stroke is equal to or above the clutch meet point, and when the clutch pedal stroke becomes smaller than the clutch meet point, it increases from zero to the virtual engine torque in accordance with the decrease in the clutch pedal stroke.

The virtual transmission torque is virtual torque output from the virtual manual transmission. The vehicle model MOD01 calculates the driving wheel torque from the virtual transmission torque and a reduction ratio. The driving wheel torque is a total amount of the torque given to the right and left front wheels 6F and the right and left rear wheels 6R.

In Process P132, the torque of the front motor 4F is calculated by multiplying the driving wheel torque calculated in Process P131 by a torque distribution rate to the front wheels 6F and a reduction ratio from an output shaft of the front motor 4F to the front wheels 6F. The control device 101 controls the front inverter 3F such that the front motor 4F generates the torque calculated in Process P132. In Process P133, the torque of the rear motor 4R is calculated by multiplying the driving wheel torque calculated in Process P131 by a torque distribution rate to the rear wheels 6R and a reduction ratio from an output shaft of the rear motor 4R to the rear wheels 6R. The control device 101 controls the rear inverter 3R such that the rear motor 4R generates the torque calculated in Process P133.

### 4. Configuration of Selector and Method of Mode Switching

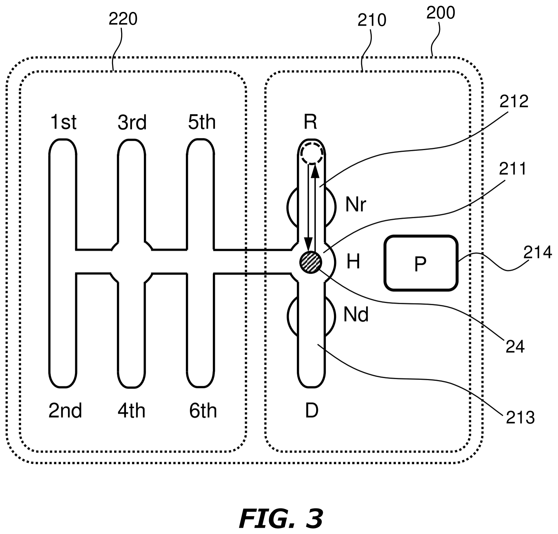

FIG. 3 is a diagram for explaining a configuration of the selector 200, specifically a configuration of the travel range selector 210, and how to operate it. The travel range selector 210 is a momentary-type selector having a home position 211. When the driver moves the shift lever 24 to an Nr position along a reverse gate 212, a neutral range is selected, and when the driver moves the shift lever 24 to an R position, a reverse range is selected. When the driver moves the shift lever 24 to an Nd position along a drive gate 213, the neutral range is selected, and when the driver moves the shift lever 24 to a D position, a drive range is selected. In every position, when the driver releases the shift lever 24, the shift lever 24 automatically returns to the home position 211. A parking range is selected by the driver pressing a P button 214. That is, in the automatic control mode, when the shift lever 24 is not being operated by the driver, the shift lever 24 is in the home position 211 and does not indicate a state of the vehicle. In the automatic control mode, a current travel range is displayed on a meter panel, touch panel display, or the like.

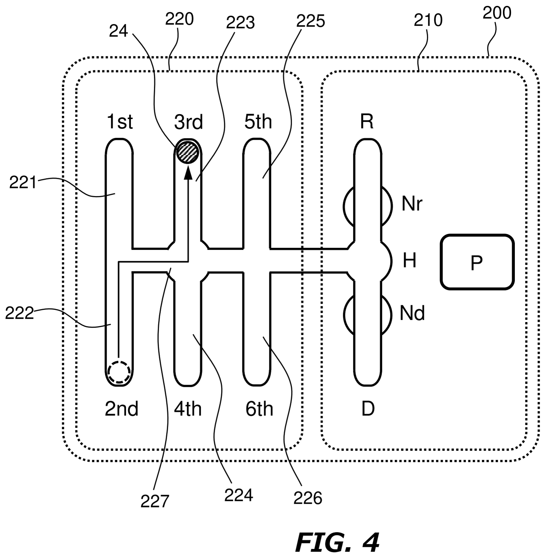

FIG. 4 is a diagram for explaining a configuration of the shift position selector 220 and how to operate it. The shift position selector 220 is a selector that imitates an H-type shifter, and is an alternate-type selector. The shift position selector 220 includes six shift gates 221 to 226 respectively corresponding to the shift positions of first to sixth gear. The shift gates 221 to 226 are connected to each other via a neutral 227. When the driver moves the shift lever 24 to one of the shift gates, the shift position selector 220 outputs a shift position signal indicating the shift position associated with the shift gate. The shift lever 24 placed in the shift gate is held there until it is operated again by the driver. FIG. 4 shows how the shift lever 24 moves when shift change from the second gear to the third gear is performed. The shift lever 24 is temporarily returned from the second-gear shift gate 222 to the neutral 227, and then moved from the neutral 227 to the third-gear shift gate 223. When the shift lever 24 is returned to the neutral 227, the shift position selector 220 outputs the shift position signal indicating the neutral, and when the shift lever 24 is placed in the shift gate 223, the shift position selector 220 outputs the shift position signal indicating the third gear.

Selecting the travel range by operating the travel range selector 210 is operation performed in the automatic control mode. Selecting the shift position by operating the shift position selector 220 is operation performed in the manual operation mode. Therefore, switching the automatic control mode and the manual operation mode means switching operation of the travel range selector 210 and operation of the shift position selector 220.

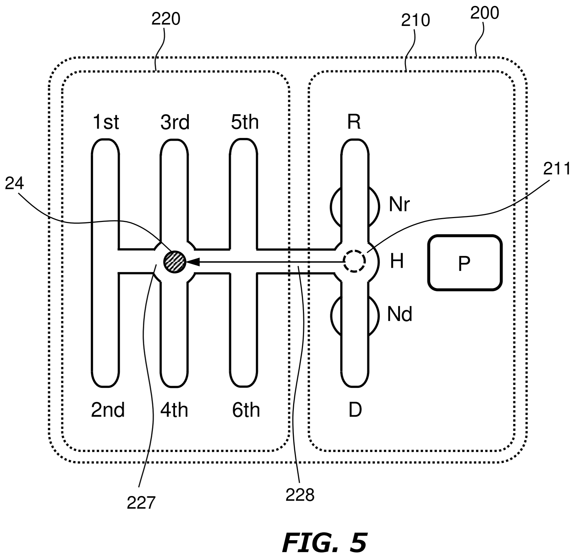

FIG. 5 is a diagram for explaining how the operation of the travel range selector 210 is switched to the operation of the shift position selector 220. The home position 211 of the travel range selector 210 and the neutral 227 of the shift position selector 220 are connected by a selector connecting path 228. As described above, the shift lever 24 is shared between the shift position selector 220 (a first position) and the travel range selector 210 (a second position). The driver can move the shift lever 24 along the selector connecting path 228 from the home position 211 to the neutral 227 or from the neutral 227 to the home position 211. The position of the shift lever 24 may be changed by, for example, sliding the shift lever 24 or by rotating the shift lever 24 around a fulcrum. As shown in FIG. 5, by switching a position of the shift lever 24 from the home position 211 to the neutral 227, switching the automatic control mode to the manual operation mode is achieved. Conversely, by switching the position of the shift lever 24 from the neutral 227 to the home position 211, switching the manual operation mode to the automatic control mode is achieved.

However, if the position of the shift lever 24 could be freely switched between the neutral 227 and the home position 211 without any restrictions, there is a concern that the mode may be unintentionally switched due to erroneous operation. For this reason, the shift lever 24 is locked in order to restrict switching of the position between the neutral 227 and the home position 211. When switching the mode, the driver is required to unlock it. The lock of the shift lever 24 is unlocked by operation of a switching operation interface, which is described next.

### 5. Configuration of Switching Operation Interface and Its Operation Method

### 5-1. First Embodiment

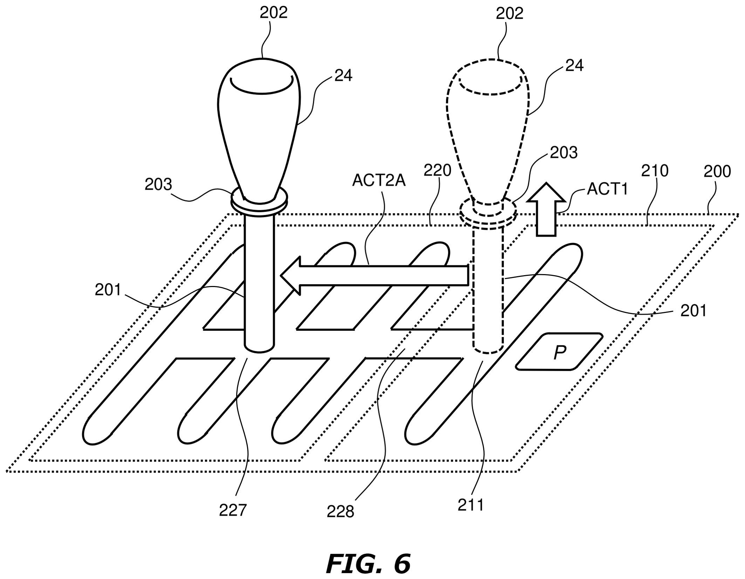

FIG. 6 shows a first embodiment of the operation interface used to switch the shift position selector 220 and the travel range selector 210. As mentioned above, one of the switching operation interfaces is the shift lever 24. In other embodiments described below, the shift lever 24 is also used as one of the switching operation interfaces. By using the shift lever 24 as one of the operation interfaces used for switching the mode, movement that is necessary for operating the shift lever 24 in the manual operation mode can be utilized for switching the mode. This allows the driver to perform the switching operation with smooth movements.

In the first embodiment, a pull collar 203 provided on the shift lever 24 is used as the other switching operation interface. The shift lever 24 has a shift rod 201 stretching upward from the selector 200 and a shift knob 202 provided at the tip of the shift rod 201. The pull collar 203 is provided on the shift rod 201 and is movable axially along the shift rod 201. The pull collar 203 is provided at a position where the driver can pull it up with his/her fingers while gripping the shift knob 202. The pull collar 203 is a momentary-type switch that automatically returns to its original position when the driver releases his/her fingers from the pull collar 203. The pull collar 203 is a switch which unlocks a lock on the shift lever 24, and while the pull collar 203 is pulled up, the lock on the shift lever 24 remains unlocked.

FIG. 6 shows the driver's actions for switching from the travel range selector 210 to the shift position selector 220. First, at the home position 211 of the travel range selector 210, the driver pulls up the pull collar 203 (ACT 1). Next, while keeping the pull collar 203 pulled up, the driver switches the position of the shift lever 24 from the home position 211 to the neutral 227 of the shift position selector 220 (ACT 2A). By a series of these two actions, the lock on the shift lever 24 is unlocked and switching from the travel range selector 210 to the shift position selector 220, that is, switching from the automatic control mode to the manual operation mode, is achieved.

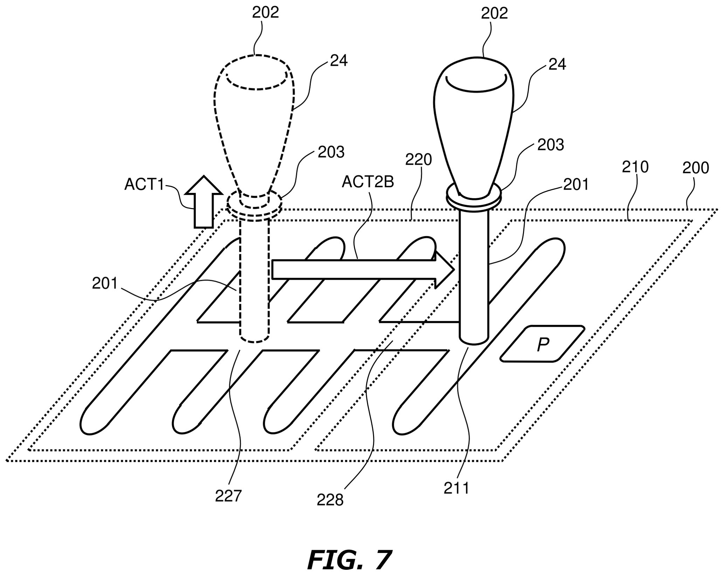

FIG. 7 shows the driver's actions for switching from the shift position selector 220 to the travel range selector 210. First, at the neutral 227 of the shift position selector 220, the driver pulls up the pull collar 203 (ACT 1). Next, while keeping the pull collar 203 pulled up, the driver switches the position of the shift lever 24 from the neutral 227 to the home position 211 of the travel range selector 210 (ACT 2B). By a series of these two actions, the lock on the shift lever 24 is unlocked and switching from the shift position selector 220 to the travel range selector 210, that is, switching from the manual operation mode to the automatic control mode, is achieved.

According to the first embodiment, the driver can operate the pull collar 203 to unlock the lock on the shift lever 24 while placing a different hand from a hand operating the shift lever 24 on a steering wheel. As a result, erroneous operation when switching the mode can be prevented, and the driver can switch the mode safely even while the vehicle is driving.

Furthermore, according to the first embodiment, the driver can unlock the lock on the shift lever 24, while operating the shift lever 24, by operating the pull collar 203 with the same hand as a hand operating the shift lever 24. In other words, the driver can perform a series of actions required to switch the mode with one hand. As a result, erroneous operation when switching the mode can be prevented, and the driver can switch the modes smoothly and without hassle.

In addition, according to the first embodiment, an operation sequence of the pull collar 203 and the shift lever 24 is the same between when switching from the automatic control mode to the manual operation mode and when switching from the manual operation mode to the automatic control mode. That is, first the pull collar 203 is pulled up, and then the shift lever 24 is switched. By making the operation sequence common between the modes in this way, not only erroneous operation can be prevented, but operability for the driver can also be improved.

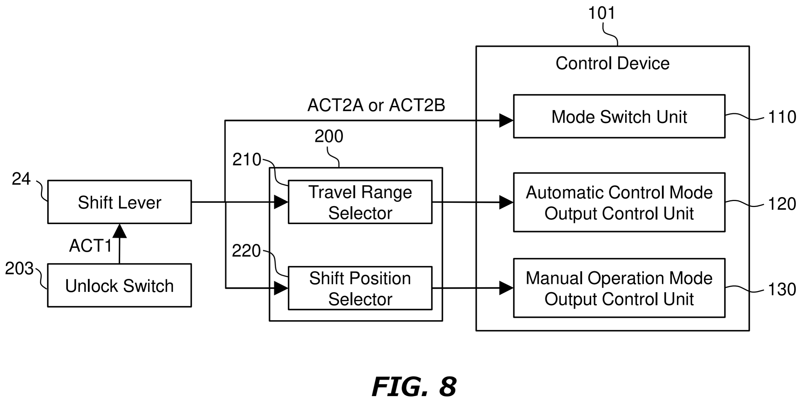

FIG. 8 is a diagram showing a configuration of a control system and a flow of a switching process for realizing the above-mentioned switching of the automatic control mode and the manual operation mode. Here, the pull collar is referred to as an unlock switch, focusing on its function. In the control system shown in FIG. 8, the shift lever 24 is mechanically locked and unlocked by the unlock switch 203. By unlocking the lock by the action ACT1 on the unlock switch 203, the action ACT2A or ACT2B on the shift lever 24 is enabled.

When a signal corresponding to the action ACT2A is input to the mode switch unit 110, the mode switch unit 110 switches the mode from the automatic control mode to the manual operation mode. After the action ACT2A, operation of the shift position selector 220 using the shift lever 24 is enabled. The shift position selected by the shift position selector 220 is input to the manual operation mode output control unit 130, and the output control of the motor in accordance with the shift position is performed.

When a signal corresponding to the action ACT2B is input to the mode switch unit 110, the mode switch unit 110 switches the mode from the manual operation mode to the automatic control mode. After the action ACT2B, operation of the travel range selector 210 using the shift lever 24 is enabled. The travel range selected by the travel range selector 210 is input to the automatic control mode output control unit 120, and the output control of the motor in accordance with the travel range is performed.

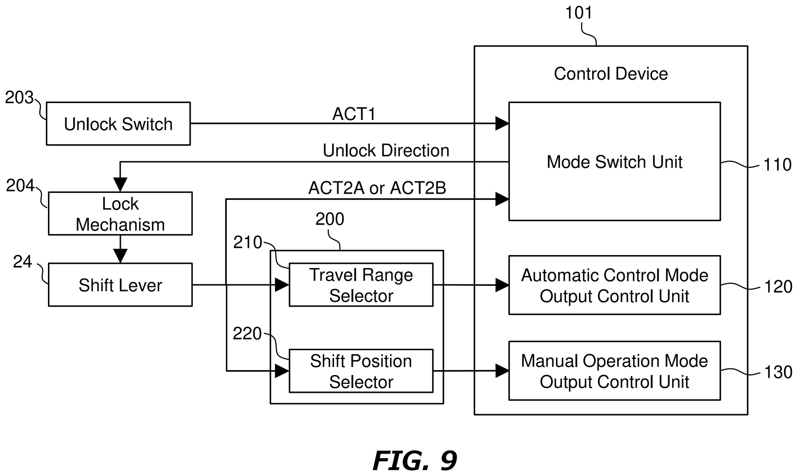

FIG. 9 is a diagram showing another example of the configuration of the control system and the flow of the switching process for realizing the above-mentioned switching of the automatic control mode and the manual operation mode. In the control system shown in FIG. 9, a lock mechanism 204 is provided in addition to the unlock switch 203. The unlock switch 203 outputs a signal in response to the action ACT1. When the signal corresponding to the action ACT1 is input to the mode switch unit 110, the mode switch unit 110 issues an unlock direction to the lock mechanism 204. Locking and unlocking of the shift lever 24 is performed mechanically or electronically by the lock mechanism 204. Upon receiving the unlock direction from the mode switch unit 110, the lock mechanism 204 unlocks the lock on the shift lever 24. By the lock mechanism 204 unlocking the lock on the shift lever 24, the action ACT2A or ACT2B on the shift lever 24 is enabled.

### 5-2. Second Embodiment

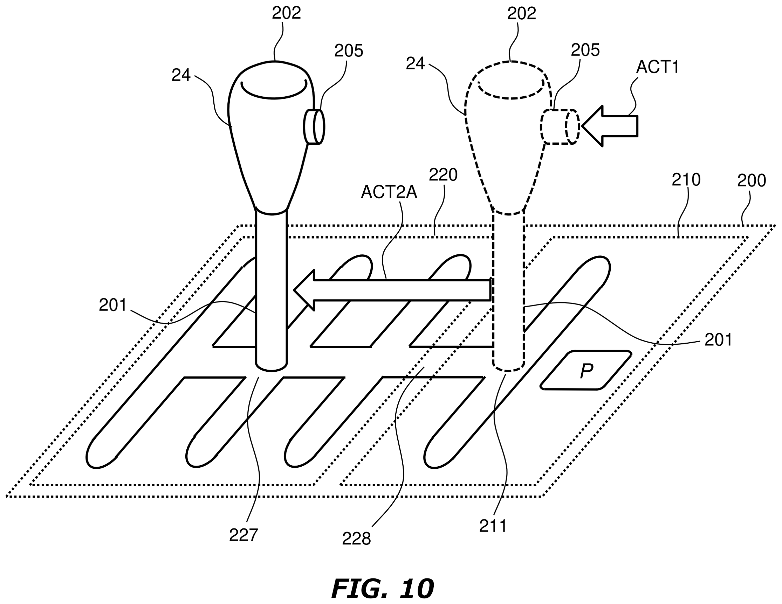

FIG. 10 shows a second embodiment of the operation interface used to switch the shift position selector 220 and the travel range selector 210. In the second embodiment, a button 205 provided on the shift knob 202 is used as the switching operation interface other than the shift lever 24. The button 205 may be provided on the side face of the shift knob 202 as in the example shown in FIG. 10, on the top of the shift knob 202, or on the front face of the shift knob 202. The button 205 is provided in a position where the driver can press it with his/her finger while holding the shift knob 202. The button 205 is a momentary-type switch that automatically returns to its original position when the driver releases his/her finger from the button 205. The button 205 is an unlock switch that unlocks the lock on the shift lever 24, and the lock on the shift lever 24 remains unlocked while the button 205 is pressed.

FIG. 10 shows the driver's actions for switching from the travel range selector 210 to the shift position selector 220. First, at the home position 211 of the travel range selector 210, the driver presses the button 205 (ACT 1). Next, while still pressing the button 205, the driver switches the position of the shift lever 24 from the home position 211 to the neutral 227 of the shift position selector 220 (ACT 2A). By a series of these two actions, the lock on the shift lever 24 is unlocked and switching from the travel range selector 210 to the shift position selector 220, that is, switching from the automatic control mode to the manual operation mode, is achieved. Switching from the shift position selector 220 to the travel range selector 210 is also achieved by similar actions by the driver.

### 5-3. Third embodiment

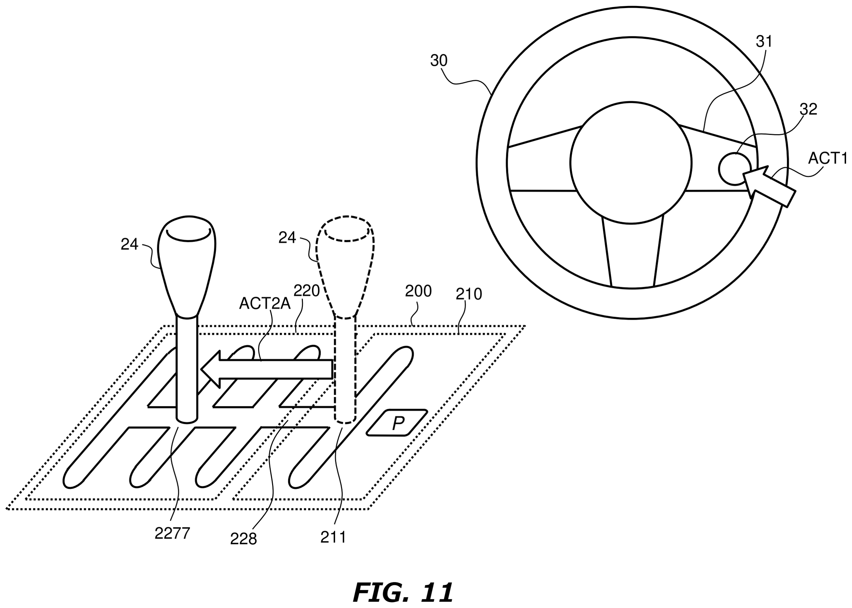

FIG. 11 shows a third embodiment of the operation interface used to switch the shift position selector 220 and the travel range selector 210. In the third embodiment, a button 32 provided on a steering wheel 30 is used as the switching operation interface other than the shift lever 24. The button 32 is preferably provided at a position where it can be operated by the driver with a hand different from a hand operating the shift lever 24. For example, if the shift lever 24 is located on the left side of the steering wheel 30, the button 32 may be provided on a right steering spoke 31. Furthermore, the button 32 is preferably located such that the driver can press it while gripping the steering wheel 30. The button 32 is a momentary-type switch that automatically returns to its original position when the driver releases his/her finger from the button 32. The button 32 is the unlock switch that unlocks the lock on the shift lever 24, and the shift lever 24 remains unlocked while the button 32 is pressed.

FIG. 11 shows the driver's actions for switching from the travel range selector 210 to the shift position selector 220. First, when the shift lever 24 is in the home position 211 of the travel range selector 210, the driver presses the button 32 (ACT 1). Next, while still pressing the button 32, the driver switches the position of the shift lever 24 from the home position 211 to the neutral 227 of the shift position selector 220 (ACT 2A). By a series of these two actions, the lock on the shift lever 24 is unlocked and switching from the travel range selector 210 to the shift position selector 220, that is, switching from the automatic control mode to the manual operation mode, is achieved. Switching from the shift position selector 220 to the travel range selector 210 is also achieved by similar actions by the driver.

### 5-4. Fourth Embodiment

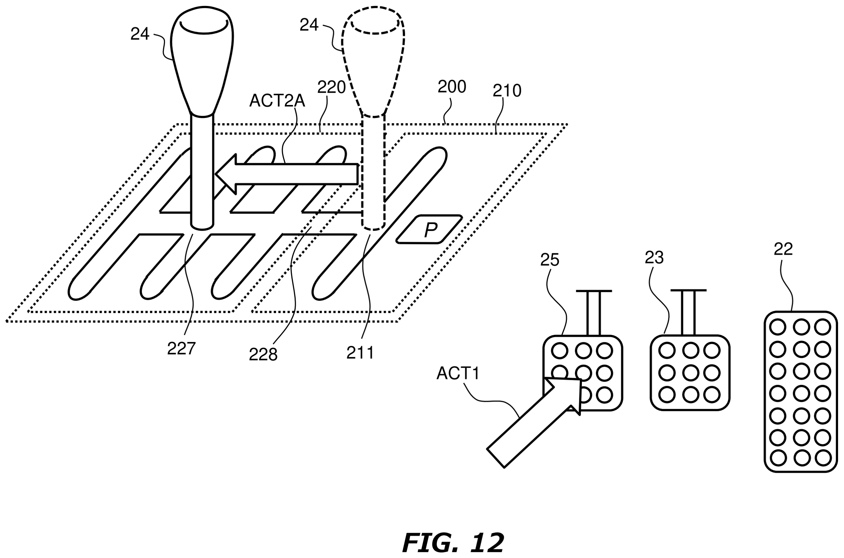

FIG. 12 shows a fourth embodiment of the operation interface used to switch the shift position selector 220 and the travel range selector 210. In the fourth embodiment, a dummy clutch pedal 25 is used as the switching operation interface other than the shift lever 24. The dummy clutch pedal 25 is also a kind of momentary-type switch that automatically returns to its original position when the driver takes his/her foot off the dummy clutch pedal 25. When the mode is switched, the dummy clutch pedal 25 functions as the unlock switch that unlocks the lock on the shift lever 24, and the shift lever 24 is kept unlocked while the dummy clutch pedal 25 is depressed.

FIG. 12 shows the driver's actions for switching from the travel range selector 210 to the shift position selector 220. First, when the shift lever 24 is in the home position 211 of the travel range selector 210, the driver depresses the dummy clutch pedal 25 (ACT 1). Next, while keeping the dummy clutch pedal 25 depressed, the driver switches the position of the shift lever 24 from the home position 211 to the neutral 227 of the shift position selector 220 (ACT 2A). By a series of these two actions, the shift lever 24 is unlocked and switching from the travel range selector 210 to the shift position selector 220, that is, switching from the automatic control mode to the manual operation mode, is achieved. Switching from the shift position selector 220 to the travel range selector 210 is also achieved by similar actions by the driver.

### 5-5. Fifth embodiment

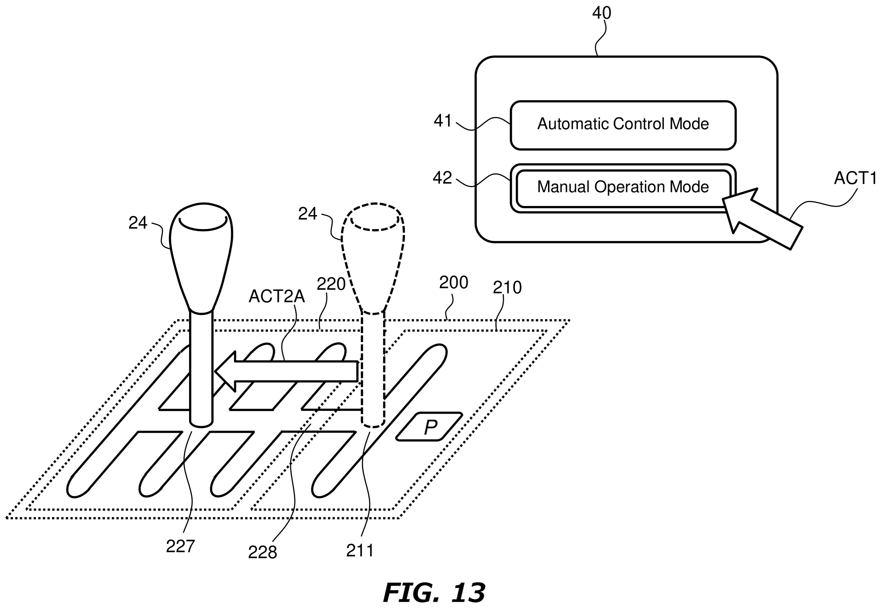

FIG. 13 shows a fifth embodiment of the operation interface used to switch the shift position selector 220 and the travel range selector 210. In the fifth embodiment, a touch panel display 40 provided in a cockpit is used as the switching operation interface other than the shift lever 24. More specifically, an automatic control mode selection button 41 and a manual operation mode selection button 42 are displayed on the touch panel display 40. The driver can turn on these buttons 41 and 42 by touching them with his/her finger. However, one of the two buttons 41 and 42 can be exclusively selected. When the manual operation mode selection button 42 is pressed while the automatic control mode selection button 41 is on, the automatic control mode selection button 41 is turned off and the manual operation mode selection button 42 is turned on. The buttons 41 and 42 are alternate-type switches, and the on/off state is maintained even when the driver releases his/her finger. The automatic control mode selection button 41 and the manual operation mode selection button 42 constitute the unlock switch for unlocking the lock on the shift lever 24.

FIG. 13 shows the driver's actions for switching from the travel range selector 210 to the shift position selector 220. First, when the shift lever 24 is in the home position 211 of the travel range selector 210, the driver presses the manual operation mode selection button 42 (ACT 1). Whether the automatic control mode or the manual operation mode is currently selected can be easily judged from a difference in display modes of the two buttons 41 and 42. When the manual operation mode selection button 42 is pressed, the lock on the shift lever 24 is unlocked, and even if the driver's finger is released, the shift lever 24 remains unlocked. Next, the driver switches the position of the shift lever 24 from the home position 211 to the neutral 227 of the shift position selector 220 (ACT 2A). By a series of these two actions, the lock on the shift lever 24 is unlocked and switching from the travel range selector 210 to the shift position selector 220, that is, switching from the automatic control mode to the manual operation mode, is achieved. Once switching to the manual operation mode is completed, the shift lever 24 is locked again. Switching from the shift position selector 220 to the travel range selector 210 is also achieved by similar actions by the driver.

### 5-6. Sixth Embodiment

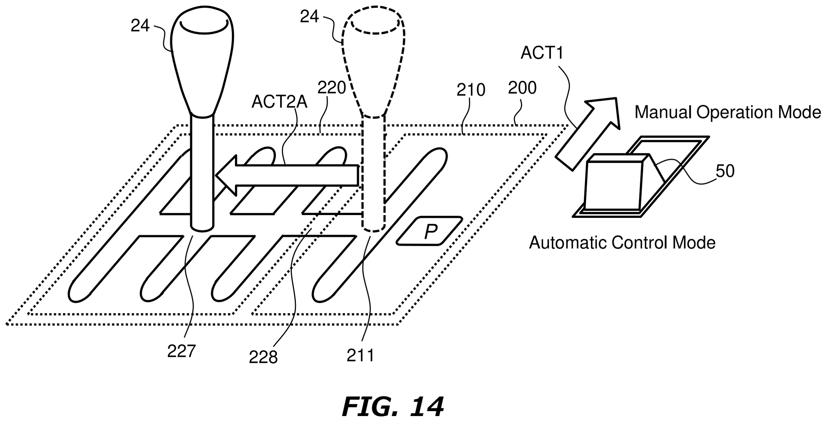

FIG. 14 shows a sixth embodiment of the operation interface used to switch the shift position selector 220 and the travel range selector 210. In the sixth embodiment, a mode select switch 50 provided on a center console or a dashboard is used as the switching operation interface other than the shift lever 24. The mode select switch 50 is an alternate-type switch that exclusively selects the automatic control mode or the manual operation mode. The mode select switch 50 functions as the unlock switch for unlocking the lock on the shift lever 24.

FIG. 14 shows the driver's actions for switching from the travel range selector 210 to the shift position selector 220. First, when the shift lever 24 is in the home position 211 of the travel range selector 210, the driver switches the mode select switch 50 from the automatic control mode to the manual operation mode (ACT 1). The lock on the shift lever 24 is unlocked by operating the mode select switch 50, and the shift lever 24 remains unlocked even when the finger is released. Next, the driver switches the position of the shift lever 24 from the home position 211 to the neutral 227 of the shift position selector 220 (ACT 2A). By these two series of actions, the lock on the shift lever 24 is unlocked, and switching from the travel range selector 210 to the shift position selector 220, that is, switching from the automatic control mode to the manual operation mode, is achieved. Once switching to the manual operation mode is completed, the shift lever 24 is locked again. Switching from the shift position selector 220 to the travel range selector 210 is also achieved by similar actions by the driver.

### 5-7. Seventh Embodiment

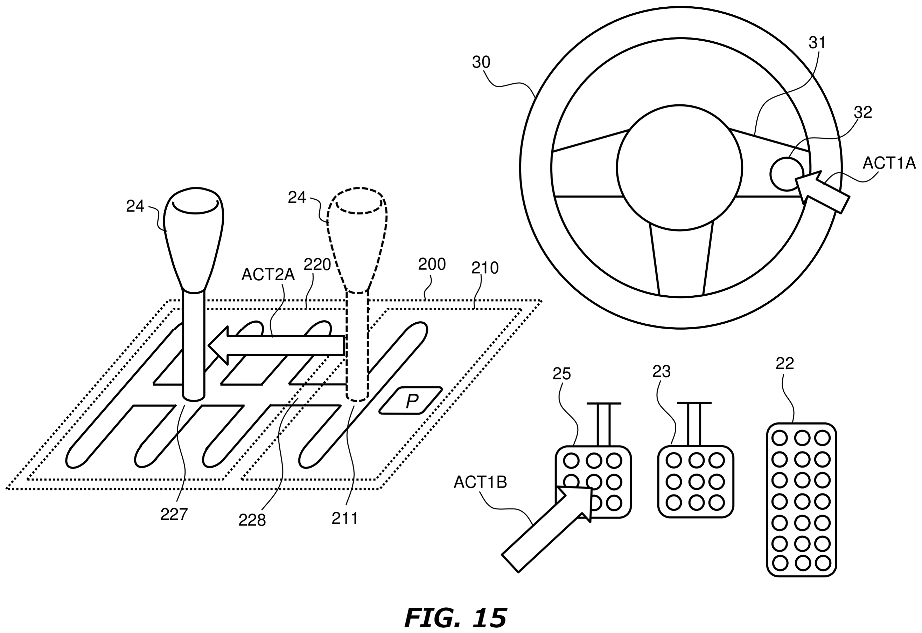

FIG. 15 shows a seventh embodiment of the operation interface used to switch the shift position selector 220 and the travel range selector 210. In the seventh embodiment, the button 32 provided on the steering wheel 30 and the dummy clutch pedal 25 are used as the switching operation interfaces other than the shift lever 24. In this embodiment, the button 32 and the dummy clutch pedal 25 constitute the unlock switch that unlocks the lock on the shift lever 24. While the button 32 is pressed and the dummy clutch pedal 25 is depressed, the shift lever 24 is kept unlocked.

FIG. 15 shows the driver's actions for switching from the travel range selector 210 to the shift position selector 220. First, when the shift lever 24 is in the home position 211 of the travel range selector 210, the driver presses the button 32 (ACT 1A) and depresses the dummy clutch pedal 25 (ACT 1B). These actions may be performed simultaneously, the button 32 may be pressed first, or the dummy clutch pedal 25 may be depressed first. Next, while pressing the button 32 and depressing the dummy clutch pedal 25, the driver switches the position of the shift lever 24 from the home position 211 to the neutral 227 of the shift position selector 220 (ACT 2A). A series of these three actions unlocks the lock on the shift lever 24, and switching from the travel range selector 210 to the shift position selector 220, that is, switching from the automatic control mode to the manual operation mode, is achieved. Switching from the shift position selector 220 to the travel range selector 210 is also achieved by similar actions by the driver.

The seventh embodiment is a combination of the third embodiment and the fourth embodiment. Alternatively, the first or second embodiment may be combined with the third embodiment, or the first or second embodiment may be combined with the fourth embodiment.

### 6. Modification Relating to Configuration of Selector

### 6-1. First Modification

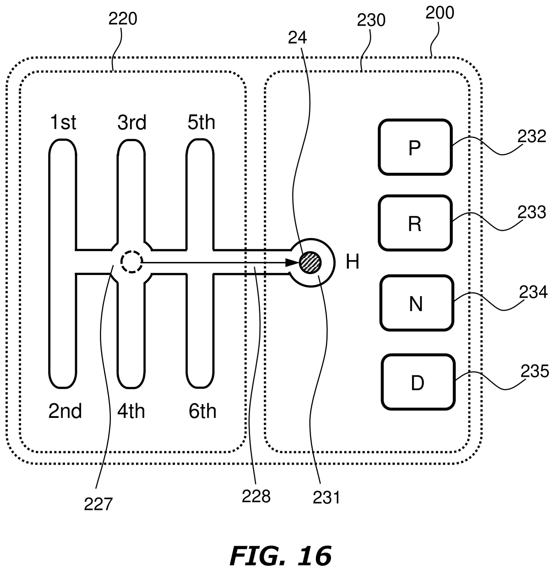

FIG. 16 shows a configuration of a first modification of the selector 200. In the first modification, the selector 200 comprises a travel range selector 230 and a shift position selector 220. The travel range selector 230 includes a parking button 232, a reverse button 233, a neutral button 234, and a drive button 235. These buttons 232 to 235 are momentary-type switches that return to their original positions when released. In the travel range selector 230, the travel range is selected using buttons 232 to 235. The travel range selector 230 has a home position 231 for the shift lever 24. In the first modification, the shift lever 24 is used only for the shift position selector 220 and is not shared with the travel range selector 230.

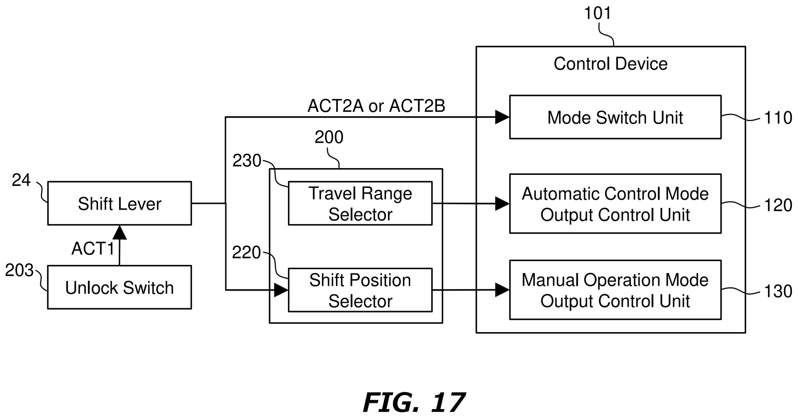

FIG. 17 is a diagram showing a configuration of a control system and a flow of the switching process for realizing switching of the automatic control mode and the manual operation mode in the first modification. In the control system shown in FIG. 17, the lock on the shift lever 24 is mechanically locked and unlocked by the unlock switch 203. By unlocking the lock by the action ACT1 on the unlock switch 203, the action ACT2A or ACT2B on the shift lever 24 is enabled.

When the signal corresponding to the action ACT2A is input to the mode switch unit 110, the mode switch unit 110 switches the mode from the automatic control mode to the manual operation mode. After the action ACT2A, operation of the shift position selector 220 using the shift lever 24 is enabled. The shift position selected by the shift position selector 220 is input to the manual operation mode output control unit 130, and the output control of the motor in accordance with the shift position is performed by the manual operation mode output control unit 130.

When the signal corresponding to the action ACT2B is input to the mode switch unit 110, the mode switch unit 110 switches the mode from the manual operation mode to the automatic control mode. After the action ACT2B, the travel range selector 230 can be operated not using the shift lever 24 but using the buttons 232 to 235. The travel range selected by the travel range selector 230 is input to the automatic control mode output control unit 120, and the output control of the motor in accordance with the travel range is performed by the automatic control mode output control unit 120.

### 6-2. Second Modification

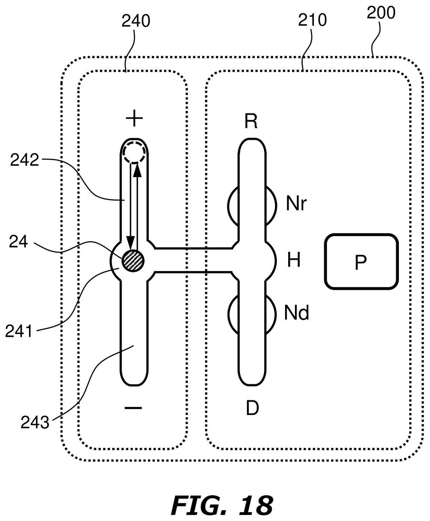

FIG. 18 shows a second modification of the configuration of the selector 200. In the second modification, the selector 200 is composed of the travel range selector 210 and a shift position selector 240. The shift position selector 240 is a selector which imitates a sequential shifter and is configured as a momentary-type selector. The shift position selector 240 includes a home position 241, an upshift gate 242, and a downshift gate 243. When the driver pushes the shift lever 24 toward the upshift gate 242, the shift position is shifted up by one stage, and when the driver pulls the shift lever 24 toward the downshift gate 243, the shift position is shifted down by one stage. The shift position selector 240 can also be combined with the travel range selector 230 of the first modification.

### 7. Another Example

A technique of the mode switching used for the electric vehicle of the present disclosure is not used for only the battery electric vehicle (BEV), but can be widely applied to an electric vehicle that has a manual operation mode, in which the motor output characteristics can be switched in multiple stages by operating the shift lever. For example, the mode switching technique of the present disclosure can be applied to a hybrid electric vehicle (HEV) or a plug-in hybrid electric vehicle (PHEV) which has a mode in which the vehicle travels solely using the driving force of the motor. The mode switching technique of the present disclosure can also be applied to a fuel cell electric vehicle (FCEV), which supplies electric energy generated by a fuel cell to a motor.

## Claims

1. An electric vehicle (100) having a plurality of modes that differ in output control of a motor(4F, 4R) in response to operation input by a driver, wherein
the plurality of modes include a manual operation mode configured to be a mode in which output characteristics of the motor(4F, 4R) can be switched in multiple stages by operating a shift lever (24), and
mode switching from the manual operation mode to another mode, or from the another mode to the manual operation mode is achieved by operating the shift lever (24) and one or more other operation interfaces in a predetermined manner.

2. The electric vehicle (100) according to claim 1, wherein the mode switching is achieved by particular operation of the shift lever (24) performed during operation of the one or more other operation interfaces.

3. The electric vehicle (100) according to claim 2, wherein a lock on the particular operation of the shift lever (24) is unlocked by operating the one or more other operation interfaces, and the mode switching is achieved by the particular operation of the shift lever (24).

4. The electric vehicle (100) according to claim 1, wherein
the shift lever (24) is configured to operate as an alternate-type lever in a first position, and as a momentary-type lever in a second position,
the first position is associated with the manual operation mode,
the second position is associated with the other mode,
a lock on movement of the shift lever (24) between the first position and the second position is unlocked by operation of the one or more other operation interfaces, and
the mode switching is achieved by switching a position of the shift lever (24) between the first position and the second position.

5. The electric vehicle (100) according to claim 4, wherein
the another mode is configured to allow a travel range to be selected in accordance with an operation amount of the shift lever (24) from a home position, or an operation direction and operation amount of the shift lever (24) from the home position.

6. The electric vehicle (100) according to any one of claims 1 to 5, wherein
the one or more other operation interfaces are operation interfaces that can be operated while a different hand from a hand operating the shift lever (24) is placed on a steering wheel.

7. The electric vehicle (100) according to any one of claims 1 to 5, wherein
the one or more other operation interfaces are operation interfaces that can be operated by a same hand as a hand operating the shift lever (24) while operating the shift lever (24).

8. The electric vehicle (100) according to any one of claims 1 to 5, wherein
operation sequence of the shift lever (24) and the one or more other operation interfaces is common to modes to be switched.

9. The electric vehicle (100) according to any one of claims 1 to 5, wherein
the another mode is a mode in which operation of the shift lever (24) is not required for the output control of the motor(4F, 4R).

10. A program executable by a computer mounted on an electric vehicle (100) comprising a shift lever (24), the program configured to cause the computer to:
enable, in the electric vehicle (100), selection of a plurality of modes that differ in output control of a motor(4F, 4R) in response to operation input by a driver, the plurality of modes including a manual operation mode in which output characteristics of the motor(4F, 4R) can be switched in multiple stages by operating a shift lever (24); and
switch a mode from the manual operation mode to another mode, or from the another mode to the manual operation mode when the shift lever (24) and one or more other operation interfaces are operated in a predetermined manner.
